# EUROPÄISCHE PATENTANMELDUNG

(11) **EP 3 750 686 A1**
(43) Veröffentlichungstag der Anmeldung: **16.12.2020**
(21) Anmeldenummer: 20170892.2
(22) Anmeldetag: 22.04.2020
(51) Int. Cl.: B29C 64/118, B29C 64/40

(54) **WASSERLÖSLICHE STÜTZSTRUKTUREN FÜR DAS STRANGABLEGEVERFAHREN**

(30) Priorität: 23.04.2019 DE 102019002936
(71) Anmelder: Universität Stuttgart, 70174 Stuttgart (DE)
(72) Erfinder: KLIEM, Silvia, 70199 Stuttgart (DE); GOEBEL, Linda, 22043 Hamburg (DE); BONTEN, Christian, 70569 Stuttgart (DE)
(74) Vertreter: Müller-Boré & Partner Patentanwälte PartG mbB

(57) **Zusammenfassung**

Die vorliegende Erfindung betrifft ein Verfahren zur Herstellung eines Kunststoffbauteiles durch Schmelzschichten, wobei das herzustellende Kunststoffbauteil eine komplexe Geometrie aufweisen soll, welche den Einsatz einer Stützstruktur während des schichtweisen Aufbaus des Kunststoffbauteiles erfordert. Das erfindungsgemäße Herstellungsverfahren ist dadurch gekennzeichnet, dass die Stützstruktur aus einem thermoplastischen Kunststoff K₂, welcher mit einem Salz compoundiert ist, gebildet ist, wobei der thermoplastische Kunststoff K₂ biologisch abbaubar sein kann. Ferner betrifft die vorliegende Erfindung ein Filament zur Verwendung als Stützstruktur in dem erfindungsgemäßen Herstellungsverfahren.

## Beschreibung

Die vorliegende Erfindung betrifft ein Verfahren zur Herstellung eines Kunststoffbauteiles durch Schmelzschichten, wobei das herzustellende Kunststoffbauteil eine komplexe Geometrie aufweisen soll, welche den Einsatz einer Stützstruktur erfordert. Ferner betrifft die vorliegende Erfindung ein Filament zur Verwendung als Stützstruktur in dem erfindungsgemäßen Herstellungsverfahren.

Im Stand der Technik sind verschiedene additive Fertigungsverfahren bekannt, um Kunststoffbauteile unter Anwendung eines 3D-Drucks in Kleinserien oder als Prototyp herzustellen, wie etwa das selektive Lasersintern (*engl.* selective laser sintering, SLS) oder das Schmelzschichten (*engl.* fused deposition modeling, FDM). Das auch als Strangablegeverfahren bezeichnete Schmelzschichten ist ein Fertigungsverfahren aus dem Bereich Rapid Prototyping, mit dem ein Bauteil schichtweise aus einem schmelzfähigen Ausgangsstoff, beispielsweise einem schmelzfähigen Kunststoff, aufgebaut wird.

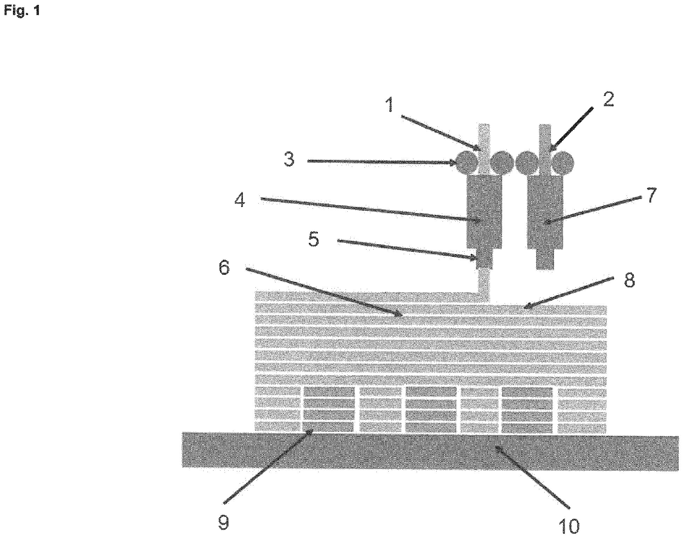

Um in einem derartigen mittels Schmelzschichten herzustellenden Kunststoffbauteil komplexe Geometrien, wie etwa Überhänge bzw. Hinterschneidungen, zu ermöglichen, bedarf es des Einsatzes einer Stützstruktur. Stützstrukturen, welche synonym auch als Stützkonstruktionen bezeichnet werden, kommen überall dort zum Einsatz, wo das herzustellende Kunststoffbauteil freistehend bzw. freihängend sein soll, d. h. an all jenen Stellen, die ansonsten frei im Raum, also ohne Stützung durch eine bereits fertiggestellte Teilkomponente des Kunststoffbauteiles, entstehen würden. Die Stützstruktur vermittelt somit den notwendigen Halt der während des Schmelzschichtens linienartig aufgetragenen Kunststoffschmelze, welche nach Erstarrung das Kunststoffbauteil bildet. Das Prinzip ist in Fig. 1 veranschaulicht.

Nach der Fertigstellung bzw. dem Erstarren des Kunststoffbauteiles ist dieses in den Bereichen, wo sich die Überhänge bzw. Hinterschneidungen befinden, selbsttragend.

Die Stützstruktur ist nunmehr überflüssig bzw. vielmehr störend. Sie muss daher entfernt, also von dem hergestellten Kunststoffbauteil abgetrennt werden. Häufig bestehen die im Schmelzschichten eingesetzten Stützstrukturen aus dem gleichen Werkstoff wie das herzustellende Kunststoffbauteil. In diesem Fall muss die Stützstruktur nach der Fertigstellung des Kunststoffbauteiles mechanisch von diesem entfernt werden, vorwiegend in zeitintensiver Handarbeit. Selbst eine aufwendige mechanische Nachbearbeitung mittels Schleifen und Polieren kann hierbei nicht immer verhindern, dass Rückstände der Stützstruktur am Kunststoffbauteil haften bleiben, was dessen äußeres Erscheinungsbild negativ beeinflusst. Ebenso können durch die mechanische Nachbearbeitung Kratzer in der Oberfläche des Kunststoffbauteiles entstehen, welche sich ebenfalls negativ auf dessen äußeres Erscheinungsbild auswirken. Werden die Stützstrukturen unter erhöhtem Krafteinsatz entfernt, kann es sogar zu einer Vorschädigung des Kunststoffbauteiles kommen.

Zwar wurde in diesem Zusammenhang durch die Kombination unterschiedlicher Werkstoffe für das Kunststoffbauteil und für die Stützstruktur, welche weniger stark aneinander haften, eine Verbesserung erzielt. Da es jedoch beim Stützen des Kunststoffbauteiles notwendigerweise zu einer Kraftübertragung auf die Stützstruktur kommt, kann zwar die Haftung verringert, jedoch nie vollständig unterbunden werden. Somit lassen sich auch bei Verwendung unterschiedlicher Werkstoffe die vorstehend beschriebenen Probleme, wie sie bislang beim Entfernen der Stützstruktur auftreten, nicht vollständig vermeiden.

Im Stand der Technik sind auch Stützstrukturen aus wasserlöslichen Polymeren, wie etwa Polyvinylpyrrolidon, bekannt, die nach der Fertigstellung des Kunststoffbauteiles ausgewaschen werden können. Die in Wasser gelösten Polymerketten der Stützstruktur können jedoch nicht über eine übliche Kläranlage aus dem Abwasser entfernt werden, womit sie letztlich in die Umwelt gelangen. Die Folgen dieser Art der Umweltverschmutzung auf Mensch und Natur sind noch nicht erforscht.

Der vorliegenden Erfindung liegt somit die Aufgabe zugrunde, ein Verfahren bereitzustellen, welches die Herstellung eines Kunststoffbauteiles komplexer Geometrie durch Schmelzschichten erlaubt, wobei sich die hierbei zum Einsatz kommende Stützstruktur nach Beendigung des Schmelzschichtens rückstands- und belastungsfrei von dem fertiggestellten Kunststoffbauteil abtrennen lassen soll, ohne dabei dessen äußeres Erscheinungsbild zu beeinträchtigen und die Umwelt zu schädigen.

Diese Aufgabe wird durch die in den Ansprüchen gekennzeichneten Ausführungsformen der vorliegenden Erfindung gelöst.

Insbesondere wird erfindungsgemäß ein Verfahren zur Herstellung eines Kunststoffbauteiles durch Schmelzschichten bereitgestellt, welches die folgenden Schritte (a) und (b) umfasst:
(a) wiederholtes Ablegen eines Schmelzstranges, welcher aus einem thermoplastischen Kunststoff K₁ gebildet ist, zum schichtweisen Aufbau eines Kunststoffbauteiles mit vorgegebener Geometrie, wobei während des schichtweisen Aufbaus des Kunststoffbauteiles eine Stützstruktur, welche Überhänge bzw. Hinterschneidungen im Kunststoffbauteil ermöglicht, verwendet wird, und
(b) Entfernen der Stützstruktur von dem in Schritt (a) schichtweise aufgebauten Kunststoffbauteil nach dessen Fertigstellung durch Inkontaktbringen mit einem wässrigen Lösungsmittel,
dadurch gekennzeichnet, dass die Stützstruktur aus einem thermoplastischen Kunststoff K₂, welcher mit einem Salz compoundiert ist, gebildet ist.

Das erfindungsgemäße Herstellungsverfahren ermöglicht ein rückstands- und belastungsfreies Entfernen der Stützstruktur nach Fertigstellung des Kunststoffbauteiles, ohne dass es einer aufwendigen mechanischen Nachbearbeitung, etwa durch Schleifen oder Polieren, bedarf. Die Gefahr einer Beschädigung des Kunststoffbauteiles beim Abtrennen der Stützstruktur wird auf diese Weise nahezu gänzlich minimiert. Erreicht wird dies durch den Einsatz einer Stützstruktur, welche aus einem thermoplastischen Kunststoff K₂, der mit einem Salz compoundiert ist, gebildet ist. Wird nach Beendigung des Schmelzschichtens das fertiggestellte Kunststoffbauteil einschließlich der noch anhaftenden Stützstruktur mit einem wässrigen Lösungsmittel, insbesondere mit Wasser, in Kontakt gebracht, löst sich das in der Stützstruktur enthaltene und zusammen mit dem thermoplastischen Kunststoff K₂ compoundierte Salz auf. Der thermoplastische Kunststoff K₂ geht hingegen nicht in Lösung und bleibt stattdessen als poröses Gebilde zurück. Dieses zerfällt schließlich in Bruchstücke mit Abmessungen üblicherweise im Mikrometerbereich. Der thermoplastische Kunststoff K₂ der Stützstruktur trennt sich nach dem Auflösen des Salzes somit gewissermaßen von allein ab.

Auch wenn der thermoplastische Kunststoff K₂ der Stützstruktur selbst nicht wasserlöslich ist, kann aufgrund der Wasserlöslichkeit des in der Stützstruktur enthaltenen Salzes von einer wasserlöslichen Stützstruktur gesprochen werden. Ist der thermoplastische Kunststoff K₂ zudem biologisch abbaubar, kann die Stützstruktur nach dem Inkontaktbringen mit dem wässrigen Lösungsmittel, insbesondere mit Wasser, bedenkenlos mit dem Abwasser entsorgt werden, ohne hierbei einen schädlichen Eintrag von Kunststoffen in die Umwelt zu verursachen.

Im Folgenden wird das erfindungsgemäße Verfahren zur Herstellung eines Kunststoffbauteiles durch Schmelzschichten mit den Schritten (a) und (b) näher beschrieben.

In Schritt (a) des erfindungsgemäßen Herstellungsverfahrens wird ein Schmelzstrang, welcher aus einem thermoplastischen Kunststoff K₁ gebildet ist, wiederholt zum schichtweisen Aufbau eines Kunststoffbauteiles mit vorgegebener Geometrie abgelegt.

Das wiederholte Ablegen des Schmelzstranges kann, wie in Fig. 1 dargestellt, mit Hilfe eines (Mini-)Extruders (7) erfolgen. Ein aus dem thermoplastischen Kunststoff K₁ bestehender Kunststoffdraht (1), welcher auch als Kunststofffilament oder nur als Filament bezeichnet wird, tritt - nach Erwärmen über den Schmelzpunkt des thermoplastischen Kunststoffes K₁ hinaus - in Form einer Kunststoffschmelze aus der Düse (5) einer zum Schmelzschichten geeigneten 3D-Druckvorrichtung aus. Durch linienartige Auftragung (8) der Kunststoffschmelze wird nach und nach das Kunststoffbauteil (6) entsprechend der vorgegebenen Geometrie aufgebaut, wobei im Rahmen des Schmelzschichtens auf einer bereits fertiggestellten, d. h. erstarrten Teilkomponente des Kunststoffbauteiles weitere Schichten des thermoplastischen Kunststoffes K₁ entstehen.

Das linienartige Auftragen der Kunststoffschmelze kann auf einer beliebigen für das Schmelzschichten geeigneten Bauplattform (10) erfolgen. Beispielsweise auf einer solchen Bauplattform, wie sie Fig. 1 darstellt, befindet sich die Stützstruktur (9), welche komplexe Geometrien, wie etwa Überhänge bzw. Hinterschneidungen, im herzustellenden Kunststoffbauteil ermöglicht. In gleicher Weise kann sich die Stützstruktur jedoch auch auf einer bereits fertiggestellten Teilkomponente des Kunststoffbauteiles befinden.

In einer Ausführungsform des vorstehend definierten Herstellungsverfahrens wird ebenfalls die Stützstruktur, d. h. genau wie das herzustellende Kunststoffbauteil, durch wiederholtes Ablegen eines Schmelzstranges schichtweise aufgebaut. Dies ist insbesondere dann zweckmäßig, wenn mehrere Stützstrukturen an unterschiedlichen Positionen zum Einsatz kommen sollen, was auch erst im weiteren Verlauf des Schmelzschichtens der Fall sein kann. Der schichtweise Aufbau des Kunststoffbauteiles und der Stützstruktur kann hierbei parallel erfolgen. Geeigneterweise kann zum schichtweisen Aufbau des Kunststoffbauteiles und der Stützstruktur eine 3D-Druckvorrichtung mit mindestens zwei Extrudern und Düsen verwendet werden, wie sie Fig. 1 exemplarisch darstellt, wobei die 3D-Druckvorrichtung sowohl mit Filamenten (1, 2) des thermoplastischen Kunststoffes K₁ als auch mit Filamenten des mit dem Salz compoundierten thermoplastischen Kunststoffes K₂ ausgestattet ist, wie weiter unten näher beschrieben. Vortrieb (3) sowie Kontaktheizung (4) der 3D-Druckvorrichtung sind in Fig. 1 ebenfalls veranschaulicht.

Darüber hinaus umfasst die vorliegende Erfindung auch Ausführungsformen, in welchen mehr als zwei verschiedene Kunststoffe zum Einsatz kommen. Beispielweise können zwei verschiedene thermoplastische Kunststoffe K₁ₐ und K_{1b} verwendet werden, welche vorzugsweise aus zwei verschiedenen Extrudern bereitgestellt werden und das Kunststoffbauteil bilden. Diese zwei verschiedenen thermoplastischen Kunststoffe K₁ₐ und K_{1b} können sich je nach Zweck sowohl in der Art des Kunststoffes als auch in der Farbe oder anderen Eigenschaften unterscheiden. Der thermoplastische Kunststoff K₂, aus welchem die Stützstruktur gebildet ist/wird, kann hier beispielsweise aus einem dritten Extruder bereitgestellt werden. Weitere Kombinationen von Kunststoffen (etwa K₁ₐ/K_{1b}/K_{1c}/K₂ oder K₁/K₂ₐ/K_{2b}) sind ebenfalls im Sinne der vorliegenden Erfindung denkbar.

Da gemäß der vorliegenden Erfindung die Wasserlöslichkeit der Stützstruktur ausschließlich auf der Löslichkeit des mit dem thermoplastischen Kunststoff K₂ compoundierten Salzes beruht, können der thermoplastische Kunststoff K₁, aus dem das aufzubauende Kunststoffbauteil gefertigt werden soll, und der thermoplastische Kunststoff K₂ der Stützstruktur sogar identisch sein. So bleibt nach Kontakt mit einem wässrigen Lösungsmittel, insbesondere mit Wasser, die Stützstruktur als ein poröses Gebilde aus dem thermoplastischen Kunststoff K₂ zurück, welches schließlich in mikrometergroße Bruchstücke zerfällt. Das aus dem identischen thermoplastischen Kunststoff aufgebaute Kunststoffbauteil wird aufgrund der fehlenden Wasserlöslichkeit des thermoplastischen Kunststoffes K₂ hingegen nicht angegriffen.

Durch die Verwendung identischer thermoplastischer Kunststoffe ist eine Kompatibilität zwischen dem Kunststoffbauteil und der Stützstruktur naturgemäß gewährleistet. Bei Stützstrukturen aus wasserlöslichen Polymeren, wie etwa Polyvinylpyrrolidon, bei dem es sich um einen konventionellen, erdölbasierten Kunststoff handelt, welcher zudem nicht biologisch abbaubar ist, muss für das herzustellende Kunststoffbauteil hingegen zwangsläufig ein anderer thermoplastischer Kunststoff verwendet werden.

Gemäß der vorliegenden Erfindung ist der thermoplastische Kunststoff K₁, welcher dem Aufbau des Kunststoffbauteiles dient, nicht weiter eingeschränkt. So kann grundsätzlich jeder thermoplastische Kunststoff, wie er üblicherweise im Schmelzschichten für Kunststoffbauteile eingesetzt wird, auch im erfindungsgemäßen Herstellungsverfahren verwendet werden.

In einer Ausführungsform des vorstehend definierten Herstellungsverfahrens ist der thermoplastische Kunststoff K₁ aus der Gruppe, bestehend aus Polyestern, Polyamiden, Polyurethanen, Polycarbonaten, Polyketonen und Polyolefinen, ausgewählt und gegebenenfalls ein thermoplastisches Elastomer. Falls gewünscht, kann der thermoplastische Kunststoff K₁ also elastomere Eigenschaften aufweisen. Bei dem thermoplastischen Kunststoff K₁ kann es sich sowohl um ein Homopolymer als auch um ein Copolymer handeln. In einer weiteren Ausführungsform des vorstehend definierten Herstellungsverfahrens ist der thermoplastische Kunststoff K₁ insbesondere aus der Gruppe, bestehend aus Polylactid (PLA), Acrylnitril-Butadien-Styrol-Copolymer(ABS), Acrylnitril-Styrol-Acrylat-Copolymer (ASA), Polymethylmethacrylat (PMMA), Polyetheretherketon (PEEK) und Glykol-modifiziertem Polyethylenterephthalat (PETG), ausgewählt, ohne jedoch hierauf beschränkt zu sein. Gemäß einer bevorzugten Ausführungsform der vorliegenden Erfindung ist der thermoplastische Kunststoff K₁ PLA oder ABS.

Typischerweise sollte der thermoplastische Kunststoff K₁ eine Schmelztemperatur von etwa 200 °C nicht überschreiten, damit seine Verarbeitbarkeit und Handhabung im Schmelzschichten gewährleistet bleiben.

Gemäß der vorliegenden Erfindung ist der mit dem Salz compoundierte thermoplastische Kunststoff K₂, welcher dem Aufbau der Stützstruktur dient, nicht weiter eingeschränkt. So kann grundsätzlich jeder thermoplastische Kunststoff, wie er üblicherweise im Schmelzschichten für Stützstrukturen eingesetzt wird, auch im erfindungsgemäßen Herstellungsverfahren verwendet werden, einschließlich der bezüglich des thermoplastischen Kunststoffes K₁ vorstehend genannten Werkstoffe. Ist der thermoplastische Kunststoff K₂ biologisch abbaubar, wie weiter unten beschrieben, ist eine Entsorgung der Stützstruktur nach der Fertigstellung des Kunststoffbauteiles über das Abwasser bedenkenlos möglich.

In einer Ausführungsform des vorstehend definierten Herstellungsverfahrens ist der thermoplastische Kunststoff K₂ aus der Gruppe, bestehend aus Polyhydroxyalkanoaten (PHA), insbesondere Polyhydroxybuttersäure (PHB), sowie Polycaprolacton (PCL), Polyethylenglykol (PEG), Stärke, Polybutylenadipatterephthalat (PBAT) und Polybutylensuccinat (PBS), ausgewählt, ohne jedoch hierauf beschränkt zu sein. All diesen (Bio-)Polymeren ist gemein, dass sie biologisch abbaubar sind. Während (thermoplastische) Stärke, PCL und PEG in Gewässern biologisch abbaubar sind, sind PBAT und PBS weniger in Gewässern, dafür aber in Böden biologisch abbaubar.

Polyhydroxyalkanoate, welche auch als Polyhydroxyfettsäuren bezeichnet werden, lassen sich sowohl in Gewässern als auch in Böden biologisch abbauen. Bei ihnen handelt es sich um natürlich vorkommende, wasserunlösliche Polyester, welche von Mikroorganismen, beispielsweise Bakterien, aerob oder anaerob abgebaut werden können. Bei dem thermoplastischen Kunststoff K₂ kann es sich beispielsweise um ein Polyhydroxyalkanoat, wie etwa Polyhydroxybuttersäure, handeln. Polyhydroxybuttersäure, welche auch als Poly(3-hydroxybutyrat) bezeichnet wird, ist ein strukturell einfaches und in der Natur häufig vorkommendes Polyhydroxyalkanoat. PHB wird durch Fermentation gebildet, beispielsweise auf Basis von Zucker oder Stärke, und besteht üblicherweise aus 1.000 bis mehreren 100.000 Hydroxybuttersäureeinheiten. Zumeist leitet sich die natürlich vorkommende Polyhydroxybuttersäure von dem Monomer mit (*R*)-Konfiguration ab. Es handelt sich demnach um Poly-(*R*)-(3-hydroxybutyrat). Das Monomer mit (*S*)-Konfiguration und das entsprechende Poly-(*S*)-(3-hydroxybutyrat) spielen demgegenüber lediglich eine untergeordnete Rolle, ebenso wie die racemische Mischung aus Poly-(*R*)-(3-hydroxybutyrat) und Poly-(*S*)-(3-hydroxybutyrat). Natürlich vorkommende Polyhydroxybuttersäure weist einen Schmelzpunkt von etwa 175 °C auf, oberhalb von 200 °C tritt Zersetzung ein. In einem Teil ihrer Eigenschaften ist Polyhydroxybuttersäure mit Polypropylen vergleichbar, insbesondere hinsichtlich ihrer Kristallinität, Glasübergangstemperatur und Zugfestigkeit. Vorliegend wird, wenn auf Polyhydroxybuttersäure Bezug genommen wird, jedwedes Stereoisomer hiervon, d. h. gleich welcher Taktizität, verstanden.

Gemäß der vorliegenden Erfindung ist der die Stützstruktur bildende thermoplastische Kunststoff K₂ mit einem Salz compoundiert, d. h. gemischt. Das Salz wird als Zuschlagstoff dem thermoplastischen Kunststoff K₂ beigemischt. Zu diesem Zweck können alle Verfahren herangezogen werden, wie sie beim Compoundieren in der Kunststofftechnik eingesetzt werden. Typischerweise erfolgt die Compoundierung in einem gleichläufigen Doppelschneckenextruder. Es kann jedoch auch ein gegenläufiger Doppelschneckenextruder, ein Planetwalzenextruder oder ein Ko-Kneter verwendet werden. Bei Letzterem handelt es sich um einen Einschneckenextruder, der sowohl eine rotatorische als auch eine translatorische Bewegung ausführt.

Grundsätzlich ist die vorliegende Erfindung, was das Salz zur Compoundierung mit dem thermoplastischen Kunststoff K₂ anbelangt, nicht besonders eingeschränkt. Geeigneterweise werden hierzu Salze verwendet, welche neben einer hohen Löslichkeit in dem verwendeten wässrigen Lösungsmittel, insbesondere in Wasser, mit diesem weder sauer noch basisch reagieren, d. h. den pH-Wert des wässrigen Lösungsmittels, insbesondere von Wasser, nahezu unverändert lassen. Auch sollten die eingesetzten Salze lediglich eine geringe Hygroskopizität aufweisen, damit es nicht bereits während des Schmelzschichtens zu einer übermäßigen Aufnahme von Wasser kommt, was ansonsten die Stabilität der Stützstruktur nachteilig beeinflussen würde. Idealerweise sind die zum Einsatz kommenden Salze weder umweltgefährlich noch anderweitig bedenklich.

In einer Ausführungsform des vorstehend definierten Herstellungsverfahrens ist das Salz, mit welchem der thermoplastische Kunststoff K₂ compoundiert ist, aus der Gruppe, bestehend aus Natriumchlorid, Natriumsulfat, Natriumnitrat, Kaliumchlorid, Kaliumsulfat und Kaliumnitrat, ausgewählt, ohne jedoch hierauf beschränkt zu sein. Die Chloride, Sulfate und Nitrate der leichten Alkalimetalle Natrium und Kalium zeichnen sich durch ihre hohe Wasserlöslichkeit aus. Auch sind sie ökologisch weitestgehend unbedenklich. Grundsätzlich können jedoch auch die entsprechenden Chloride, Sulfate und Nitrate von Erdalkalimetallen wie Magnesium und Calcium zur Compoundierung verwendet werden, wie auch diejenigen anderer Metalle, sofern sie die vorstehend genannten Kriterien erfüllen.

In Schritt (b) des erfindungsgemäßen Herstellungsverfahrens wird die Stützstruktur von dem in Schritt (a) schichtweise aufgebauten Kunststoffbauteil nach dessen Fertigstellung durch Inkontaktbringen mit einem wässrigen Lösungsmittel entfernt.

Gemäß der vorliegenden Erfindung ist das wässrige Lösungsmittel nicht besonders eingeschränkt und schließt sämtliche Lösungsmittel ein, die einen Wasseranteil von mindestens 50 Vol.-% aufweisen. Je nach Anwendung kann das wässrige Lösungsmittel Anteile von organischen Lösungsmitteln, wie Alkoholen usw. oder Additive, wie spezielle Salze usw. aufweisen. Aufgrund der einfacheren Handhabbarkeit und aus ökologischen Gründen ist die Verwendung eines wässrigen Lösungsmittels, welches im Wesentlichen, d. h. aus mindestens 95 Vol.-% Wasser besteht, bevorzugt. Gemäß einer spezifischen Ausführungsform der vorliegenden Erfindung ist das wässrige Lösungsmittel Wasser.

Das zusammen mit dem thermoplastischen Kunststoff K₂ compoundierte und die Stützstruktur bildende Salz löst sich, sobald es mit dem wässrigen Lösungsmittel, insbesondere mit Wasser, in Kontakt kommt, auf. Zurück bleibt ein poröses Gebilde des thermoplastischen Kunststoffes K₂, welcher nicht in Lösung geht. Da dieses poröse Gebilde mechanisch instabil ist, zerfällt es in mikrometergroße Bruchstücke, wodurch es sich von dem fertiggestellten Kunststoffbauteil leicht abtrennen lässt. Es bedarf somit keiner aufwendigen mechanischen Nachbearbeitung, um die Stützstruktur von dem fertiggestellten Kunststoffbauteil zu entfernen. Vielmehr trennt sich im Rahmen des erfindungsgemäßen Herstellungsverfahrens die Stützstruktur in Folge des Inkontaktbringens mit dem wässrigen Lösungsmittel, insbesondere mit Wasser, gewissermaßen von allein ab. Idealerweise zerfällt die Stützstruktur bereits während des Auflösens des compoundierten Salzes in ausreichend kleine Bruchstücke, so dass nahezu keinerlei Rückstände am fertiggestellten Kunststoffbauteil verbleiben und keine Nachbearbeitung notwendig ist. Wird für die Stützstruktur ein thermoplastischer Kunststoff K₂ verwendet, welcher nicht biologisch abbaubar ist, werden die vorstehend erwähnten Bruchstücke der Stützstruktur geeigneterweise aus dem wässrigen Lösungsmittel abfiltriert, um nicht in die Umwelt zu gelangen.

Das Massenverhältnis des thermoplastischen Kunststoffes K₂ zu dem Salz sollte dabei dergestalt sein, dass zum einen aus dem mit dem Salz compoundierten thermoplastischen Kunststoff K₂ eine Stützstruktur gebildet werden kann, beispielsweise durch Ablegen eines entsprechenden Schmelzstranges. Der Anteil des thermoplastischen Kunststoffes K₂ sollte also nicht zu niedrig gewählt sein. Zum anderen muss aber auch sichergestellt sein, dass das nach Inkontaktbringen mit dem wässrigen Lösungsmittel, insbesondere mit Wasser, zurückbleibende poröse Gebilde aus dem thermoplastischen Kunststoff K₂ ohne äußeres Zutun in einzelne Bruchstücke zerfällt. Der Anteil des thermoplastischen Kunststoffes K₂ sollte demnach auch nicht zu hoch gewählt sein.

In einer Ausführungsform des vorstehend definierten Herstellungsverfahrens liegt das Massenverhältnis des thermoplastischen Kunststoffes K₂ zu dem Salz in einem Bereich von 2:1 bis 10:1. Hierdurch wird den vorstehend genannten Erfordernissen gleichermaßen Rechnung getragen. Weiterhin ist hierbei ein Massenverhältnis in einem Bereich von 3:1 bis 8:1 bevorzugt, wobei ein Bereich von 4:1 bis 7:1 mehr bevorzugt ist und ein Bereich von 5:1 bis 6:1 noch mehr bevorzugt ist, ohne jedoch hierauf beschränkt zu sein.

Ist der thermoplastische Kunststoff K₂ ein natürlich vorkommendes Polymer, wie dies bei den vorstehend aufgezeigten Biopolymeren, beispielsweise Polyhydroxyalkanoaten, wie etwa Polyhydroxybuttersäure, der Fall ist, können im wässrigen Lösungsmittel, insbesondere im Wasser, vorhandene Mikroorganismen, Pilze und Enzyme die Bruchstücke der Stützstruktur, welche aus dem thermoplastischen Kunststoff K₂ bestehen, abbauen. Neben der vereinfachten Abtrennbarkeit der Stützstruktur, welche auf die Compoundierung mit dem Salz und dessen Herauslösen aus der Stützstruktur bei Inkontaktbringen mit dem wässrigen Lösungsmittel, insbesondere mit Wasser, zurückgeführt werden kann, lässt sich bei Verwendung eines biologisch abbaubaren thermoplastischen Kunststoffes K₂ ferner also eine vereinfachte Entsorgung der Stützstruktur herbeiführen. Da die aus dem thermoplastischen Kunststoff K₂ bestehenden Bruchstücke nur wenige Mikrometer groß sind, können diese auf einfache Weise über den Abfluss entsorgt werden. Gerade im Abwasser befindet sich eine Vielzahl von Mikroorganismen, wie etwa Bakterien, die einen Abbau unter aeroben oder anaeroben Bedingungen, unter denen ihr Wachstum möglich ist, erlauben. Abbauprodukte sind hierbei im Wesentlichen Kohlenstoffdioxid und Wasser. In einer Ausführungsform des vorstehend definierten Herstellungsverfahrens ist der thermoplastische Kunststoff K₂ entsprechend biologisch abbaubar. Eines Abfiltrierens der vorstehend erwähnten Bruchstücke der Stützstruktur aus dem wässrigen Lösungsmittel bedarf es in diesem Fall also nicht.

In Einklang mit den vorstehenden Ausführungen kann der thermoplastische Kunststoff K₂, welcher selbst nicht wasserlöslich ist, zu diesem Zweck aus der Gruppe, bestehend aus Polyhydroxyalkanoaten, insbesondere Polyhydroxybuttersäure, sowie Polycaprolacton, Polyethylenglykol, Stärke, Polybutylenadipatterephthalat und Polybutylensuccinat, ausgewählt sein, ohne sich jedoch hierauf zu beschränken.

In einem weiteren Aspekt betrifft die vorliegende Erfindung ein Filament zur Verwendung als Stützstruktur beispielsweise in dem erfindungsgemäßen Herstellungsverfahren, wobei das Filament aus dem thermoplastischen Kunststoff K₂, welcher mit dem Salz compoundiert ist, besteht. Für das erfindungsgemäße Filament gelten in Bezug auf den thermoplastischen Kunststoff K₂ und das damit compoundierte Salz alle Ausführungen, wie weiter oben im Zusammenhang mit dem erfindungsgemäßen Herstellungsverfahren beschrieben, auf gleiche Weise. Ohne hierauf beschränkt zu sein, kann das erfindungsgemäße Filament einen Durchmesser im Bereich von 1 mm bis 4 mm, beispielsweise 1,5 mm bis 3,5 mm, aufweisen. Handelsübliche Durchmesser sind z. B. 1,75 mm oder 2,85 mm.

Die vorliegende Erfindung erlaubt ein einfaches, rückstands- und belastungsfreies Abtrennen der Stützstruktur von einem Kunststoffbauteil komplexer Geometrie, welches durch Schmelzschichten hergestellt wird. Da es keiner mechanischen Nachbearbeitung bedarf, kommt es zu keiner Beeinträchtigung des äußeren Erscheinungsbildes des hergestellten Kunststoffbauteiles. Insbesondere wird dessen Oberflächenqualität nicht negativ beeinflusst. Erreicht wird dies durch den Einsatz einer Stützstruktur, welche aus einem mit einem Salz compoundierten thermoplastischen Kunststoff K₂ gebildet ist.

Darüber hinaus erlaubt die vorliegende Erfindung auch ein einfaches Entsorgen der Stützstruktur, sofern der thermoplastische Kunststoff K₂ biologisch abbaubar ist. In diesem Fall kann das mit der Stützstruktur in Kontakt gebrachte wässrige Lösungsmittel, insbesondere Wasser, beispielsweise einfach in den Abfluss gegeben werden. Im Abwasser enthaltene Mikroorganismen, Pilze oder Enzyme bauen den in Folge des Inkontaktbringens mit dem wässrigen Lösungsmittel, insbesondere Wasser, in Bruchstücke zerfallenen thermoplastischen Kunststoff K₂ der Stützstruktur schließlich ab. Da im Rahmen des erfindungsgemäßen Herstellungsverfahrens weder Säuren noch Basen eingesetzt werden müssen, werden Mikroorganismen, wie etwa Bakterien, welche empfindlich auf den pH-Wert des Wassers reagieren, durch die Entsorgung der Stützstruktur mit dem Abwasser auch nicht in ihrer Lebensgrundlage gestört.

Aufgrund ihrer geringen Größe im Mikrometerbereich weisen die aus der Stützstruktur hervorgehenden Bruchstücke des thermoplastischen Kunststoffes K₂ eine hohe spezifische Oberfläche auf, was den biologischen Abbauprozess weiter beschleunigt. Mittelbar verbleiben somit keine Rückstände des aus der Stützstruktur stammenden thermoplastischen Kunststoffes K₂ in der Umwelt. Dahingegen kommt es im Falle einer Stützstruktur aus wasserlöslichen, aber nicht biologisch abbaubaren thermoplastischen Kunststoffen lediglich zu einer physikalischen Auflösung der Polymerketten, d. h. die Polymerketten bleiben intakt. Ändern sich die Umgebungsbedingungen, beispielsweise Temperatur, Mineralstoffgehalt oder pH-Wert, kann der thermoplastische Kunststoff wieder ausfallen und verbleibt sodann als Mikroplastik, etwa in Form einzelner Polymerketten, in der Umwelt. Über Böden oder Gewässer gelangt dieser schließlich in die Nahrungskette. All jene Probleme weisen das erfindungsgemäße Herstellungsverfahren sowie das erfindungsgemäße Filament nicht auf, insbesondere wenn der für die Stützstruktur verwendete thermoplastische Kunststoff K₂ biologisch abbaubar ist.

### Figur

Fig. 1 zeigt schematisch das Ablegen eines Schmelzstranges im Rahmen des Schmelzschichtens, einschließlich der dabei zum Einsatz kommenden Stützstruktur. Diese dient der Realisierung von Kunststoffbauteilen komplexer Geometrie, welche etwa Überhänge bzw. Hinterschneidungen aufweisen.

### Bezugszeichen:

- 1: Kunststoffdraht/-filament (enthaltend den thermoplastischen Kunststoff K₁) für das Kunststoffbauteil
- 2: Kunststoffdraht/-filament (enthaltend den thermoplastischen Kunststoff K₂) für die Stützstruktur
- 3: Vortrieb
- 4: Kontaktheizung
- 5: Düse
- 6: Kunststoffbauteil
- 7: Extruder
- 8: linienartige Auftragung
- 9: Stützstruktur
- 10: Bauplattform

## Patentansprüche

1. Verfahren zur Herstellung eines Kunststoffbauteiles durch Schmelzschichten, umfassend die folgenden Schritte (a) und (b):
(a) wiederholtes Ablegen eines Schmelzstranges, welcher aus einem thermoplastischen Kunststoff K₁ gebildet ist, zum schichtweisen Aufbau eines Kunststoffbauteiles mit vorgegebener Geometrie, wobei während des schichtweisen Aufbaus des Kunststoffbauteiles eine Stützstruktur, welche Überhänge bzw. Hinterschneidungen im Kunststoffbauteil ermöglicht, verwendet wird, und
(b) Entfernen der Stützstruktur von dem in Schritt (a) schichtweise aufgebauten Kunststoffbauteil nach dessen Fertigstellung durch Inkontaktbringen mit einem wässrigen Lösungsmittel,
**dadurch gekennzeichnet, dass** die Stützstruktur aus einem thermoplastischen Kunststoff K₂, welcher mit einem Salz compoundiert ist, gebildet ist.

2. Verfahren nach Anspruch 1, wobei sich das zusammen mit dem thermoplastischen Kunststoff K₂ compoundierte Salz auflöst, sobald es mit dem wässrigen Lösungsmittel in Kontakt kommt, während der thermoplastische Kunststoff K₂ nicht in Lösung geht und als poröses Gebilde zurückbleibt.

3. Verfahren nach Anspruch 1 oder 2, wobei ebenfalls die Stützstruktur durch wiederholtes Ablegen eines Schmelzstranges schichtweise aufgebaut wird.

4. Verfahren nach Anspruch 3, wobei zum schichtweisen Aufbau des Kunststoffbauteiles und der Stützstruktur eine 3D-Druckvorrichtung mit mindestens zwei Extrudern und Düsen verwendet wird, wobei die 3D-Druckvorrichtung sowohl mit Filamenten des thermoplastischen Kunststoffes K₁ als auch mit Filamenten des mit dem Salz compoundierten thermoplastischen Kunststoffes K₂ ausgestattet ist.

5. Verfahren nach einem der Ansprüche 1 bis 4, wobei der thermoplastische Kunststoff K₁ und der thermoplastische Kunststoff K₂ identisch sind.

6. Verfahren nach einem der Ansprüche 1 bis 5, wobei der thermoplastische Kunststoff K₁ aus der Gruppe, bestehend aus Polyestern, Polyamiden, Polyurethanen, Polycarbonaten, Polyketonen und Polyolefinen, ausgewählt und gegebenenfalls ein thermoplastisches Elastomer ist.

7. Verfahren nach Anspruch 6, wobei der thermoplastische Kunststoff K₁ aus der Gruppe, bestehend aus Polylactid, Acrylnitril-Butadien-Styrol-Copolymer, Acrylnitril-Styrol-Acrylat-Copolymer, Polymethylmethacrylat, Polyetheretherketon und Glykol-modifiziertem Polyethylenterephthalat, ausgewählt ist.

8. Verfahren nach einem der Ansprüche 1 bis 7, wobei der thermoplastische Kunststoff K₂ aus der Gruppe, bestehend aus Polyhydroxyalkanoaten, insbesondere Polyhydroxybuttersäure, sowie Polycaprolacton, Polyethylenglykol, Stärke, Polybutylenadipatterephthalat und Polybutylensuccinat, ausgewählt ist.

9. Verfahren nach einem der Ansprüche 1 bis 8, wobei das Salz aus der Gruppe, bestehend aus Natriumchlorid, Natriumsulfat, Natriumnitrat, Kaliumchlorid, Kaliumsulfat und Kaliumnitrat, ausgewählt ist.

10. Verfahren nach einem der Ansprüche 1 bis 9, wobei das Massenverhältnis des thermoplastischen Kunststoffes K₂ zu dem Salz in einem Bereich von 2:1 bis 10:1 liegt.

11. Verfahren nach einem der Ansprüche 1 bis 10, wobei der thermoplastische Kunststoff K₂ biologisch abbaubar ist.

12. Filament zur Verwendung als Stützstruktur in dem Verfahren nach einem der Ansprüche 1 bis 11, wobei das Filament aus dem thermoplastischen Kunststoff K₂, welcher mit dem Salz compoundiert ist, besteht.
